# EUROPEAN PATENT SPECIFICATION

(11) **EP 2 649 871 B1**
(45) Date of publication and mention of the grant of the patent: **18.11.2015**
(21) Application number: 13154628.5
(22) Date of filing: 08.02.2013
(51) Int. Cl.: A01D 34/49, A01D 34/62, A01D 34/64, A01D 34/71, A01D 34/82

(54) **Riding-type mower**
Aufsitzmäher
Tondeuse de type à enfourcher

(30) Priority: 10.04.2012 JP 2012089763
(43) Date of publication of application: 16.10.2013
(73) Proprietor: ISEKI & CO., LTD., Ehime 799-2692 (JP)
(72) Inventor: Matsugi, Satoshi, Iyo-gun, Ehime 791-2193 (JP); Toda, Hirotaka, Iyo-gun, Ehime 791-2193 (JP)
(74) Representative: Grünecker Patent- und Rechtsanwälte PartG mbB

(56) References cited:
- JP-A- 2007 089 498
- US-A- 3 570 225
- US-A- 4 041 678
- US-A1- 2007 283 675
- US-A1- 2009 193 779

## Description

The present invention relates to a riding-type mower according to the preamble of independent claim 1. Such a riding-type mower can be taken from the prior art document JP 2007 089498 A.

Conventionally, a riding-type mower is known, which has a vehicle body and a rear discharge type mower unit disposed in a front portion of the vehicle body (see, for example, a patent document JP patent No. 4546911, hereinafter referred to as patent document 1).

The mower of the patent document 1, as shown in FIG. 14, is provided with a vehicle body 1001 on which an operator rides and a rear discharge type mower unit 1002 which is connected to the front side of the vehicle body 1001 via a link mechanism 1008. The vehicle body 1001 has a pair of left and right front wheels 1003 and a pair of left and right rear wheels 1004, and an engine 1005 is disposed in a rear portion of the vehicle body 1001.

A transmission case (not shown) is disposed under a driver's sheet 1006. Driving force transmitted from the engine 1005 is transmitted to the mower unit 1002 via a rotary shaft 1007 which is connected to a driving force-takeoff shaft (not shown) of the transmission case.

This mower unit 1002 is used for mowing a lawn or grass. When a lift cylinder (not shown) which is provided inside the transmission case is extended and contracted, the link mechanism 1008 is swung up and down to select the setting state between a lowered operation state and a raised non-operation state. In the lowered operation state, contact gauge wheels 1009 are in contact with the ground surface and it is possible to carry out the operation for mowing a lawn or grass. On the contrary, in the raised non-operation state, contact gauge wheels 1009 are raised off the ground surface.

When the vehicle body 1001 is propelled with the mower unit 1002 being in the lowered operation state, the mower unit 1002 performs the operation for mowing a lawn or grass by the plural rotatable cutting blades 1011, 1012 and 1013 which are accommodated in a cutting blade housing 1010 (mower deck). Then the cut grass is discharged from a cut grass discharge opening 1014 which is disposed throughout the entire lateral width of the rear end portion of the cutting blade housing 1010 to the rearward of the cutting blade housing 1010.

Prior art document US 2009/0193779 A1 discloses a rotary mower apparatus that includes a mower deck, and a mower blade rotatably mounted under the mower deck about a substantially vertical axis of rotation. The mower blade follows a circular path having a radius equal to a cutting radius, and a baffle plate extends downward from the mower deck adjacent to and outside the circular path. A vertical position of a bottom edge of the baffle plate can be adjusted from a lowered position to a raised position. A deflector plate can be attached such that a front edge thereof is pivotally mounted to the mower deck rearward of the mower blade such that the deflector plate extends downward and rearward from the front edge thereof, and such that the deflector plate can pivot a lowered to a raised position and be supported at a selected location in the pivot range.

Prior art document US 2007/0283676 A1 discloses an elongated barrier system for use with lawn mower decks. One or more elongate barriers are provided that are movably, i.e. pivotably, mounted proximate the outside of a grass cutting deck. When one of the barriers encounters a foreign object in a certain manner, the barrier moves towards its "tripped" position, thus causing a corresponding change to the operating characteristic of the lawn mover, be it a termination of the cutting process, the mower drive process, or both. The barriers can be used with electric or mechanical control elements.

Prior art document US 4,041,678 discloses a short turn vehicle having front and rear, centerline mounted, power driven, steerable wheels, and a pair of outrigger stabilizing wheels that are mounted on a rigid frame which is restrained against all but vertical movement relative to the frame. The vehicle is capable of zero radius turns under full load. The vehicle is ideally suited as a conveyance of rotary mowers since the vehicle's wheels guard the rotary mowing unit. Said unit comprises a mower housing supported with springs in vertical direction. Front and rear edges of the mower housing are provided with rolled edges for engaging and riding over obstructions, and in turn compressing the springs.

However, in the case of the mower unit 1002 disclosed in the patent document 1, since the cut grass discharge opening 1014 is the opening portion for discharging the cut grass, a foot of the person may get into the opening portion. And as a result, there is a risk that the foot comes in contact with a turning blade.

In view of the above-mentioned problem of the conventional mower in which the rear discharge type mower unit is disposed, an object of the present invention is to provide a riding-type mower with safety improved.

According to the present invention said object is solved by a riding-type mower having the features of independent claim 1. A preferred embodiment is laid down in the dependent claim.

According to the above described configuration, it is possible to prevent a foot from getting into the cut grass discharge opening, the guard member can guard the foot of the person from the area where the foot may get into the cut grass discharge opening, when the mower unit is raised to carry out the maintenance, the guard member can be kept away from the ground by turning the guard member, and the guard member can be maintained in posture along the cut grass guide member.

According to the above described preferred configuration, since the guard member is a frame body, the cut grass, which is discharged from the cut grass discharge opening, can pass through the inside of the frame body of the guard member. Therefore, the discharge of the cut grass is less likely to be checked.

### ADVANTAGEOUS EFFECTS OF INVENTION

According to the present invention, it is possible to provide a riding-type mower with safety improved.

### BRIEF DESCRIPTION OF THE DRAWINGS

FIG. 1 is a left side view of a riding-type mower according to Embodiment 1 of the present invention;
FIG. 2 is a plan view of the riding-type mower according to Embodiment 1 of the present invention;
FIG. 3A is a plan view of a mower unit according to Embodiment 1 of the present invention;
FIG. 3B is a rear side view of the mower unit according to Embodiment 1 of the present invention;
FIG. 3C is a left side view of the mower unit according to Embodiment 1 of the present invention;
FIG. 4 is a bottom view of the mower unit according to Embodiment 1 of the present invention;
FIG. 5 is a schematic perspective view viewed from the bottom side of the mower unit according to Embodiment 1 of the present invention;
FIG. 6A is a plan view which shows a state where a belt cover is removed from the mower unit according to Embodiment 1 of the present invention;
FIG. 6B is a left side view of FIG. 6A;
FIG. 7A is a plan view of a guard member of the mower unit according to Embodiment 1 of the present invention;
FIG. 7B is a front view of the guard member of the mower unit according to Embodiment 1 of the present invention;
FIG. 7C is a left side view of the guard member of the mower unit according to Embodiment 1 of the present invention;
FIG. 8 is a perspective view of the guard member mounted on the mower unit according to Embodiment 1 of the present invention;
FIG. 9A is a perspective view which shows a state where the guard body of the guard member according to Embodiment 1 of the present invention is allowed to be turned upward before the mower unit stands on the ground;
FIG. 9B is a perspective view which shows a state where the mower unit according to Embodiment 1 of the present invention stands on the ground while the guard body being allowed to be turned upward;
FIG. 10 is a partial enlarged perspective view which shows a state where a part of the top plate is excised in order to show a reinforcement lib that is disposed in the rear part of the mower deck of the mower unit according to Embodiment 1 of the present invention;
FIG. 11 is a left side view which shows a state where the mower unit according to Embodiment 1 of the present invention stands on the ground;
FIG. 12 is a partial enlarged view of region E of FIG. 11;
FIG. 13 is a partial enlarged perspective view of right side portion of the region E of FIG. 11; and

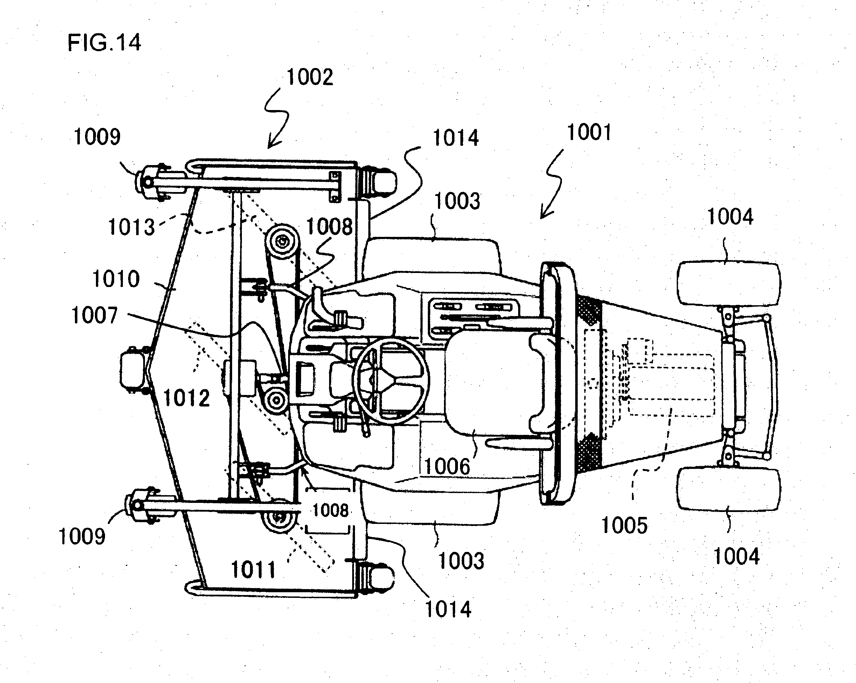

FIG. 14 is a plan view of the conventional mower which is provided with the rear discharge type mower unit.

### Description of Symbols

- 1: Vehicle body
- 2: Mower unit
- 3: Front wheel
- 4: Rear wheel
- 5: Engine
- 6: Floor part
- 7: Driver's seat
- 8: Steering post
- 9: Steering wheel
- 10: Transmission case
- 11L: Lift arm of left side link mechanism
- 11R: Lift arm of right side link mechanism
- 12: Drive force-transmitting shaft
- 20: Mower deck (Cutting blade housing)
- 21: First rotatable cutting blade
- 22: Second rotatable cutting blade
- 23: Third rotatable cutting blade
- 24: Belt cover
- 25,27,28: Roller
- 26: Contact gauge wheel
- 29: Protector
- 150: Guard member
- 151: Fixing plate
- 152: Guard body
- 153: Turnable shaft

### PREFERRED EMBODIMENTS OF THE INVENTION

Hereinafter, a riding-type mower in accordance with an embodiment of the present invention will be described with reference to the drawings.

### (Embodiment 1)

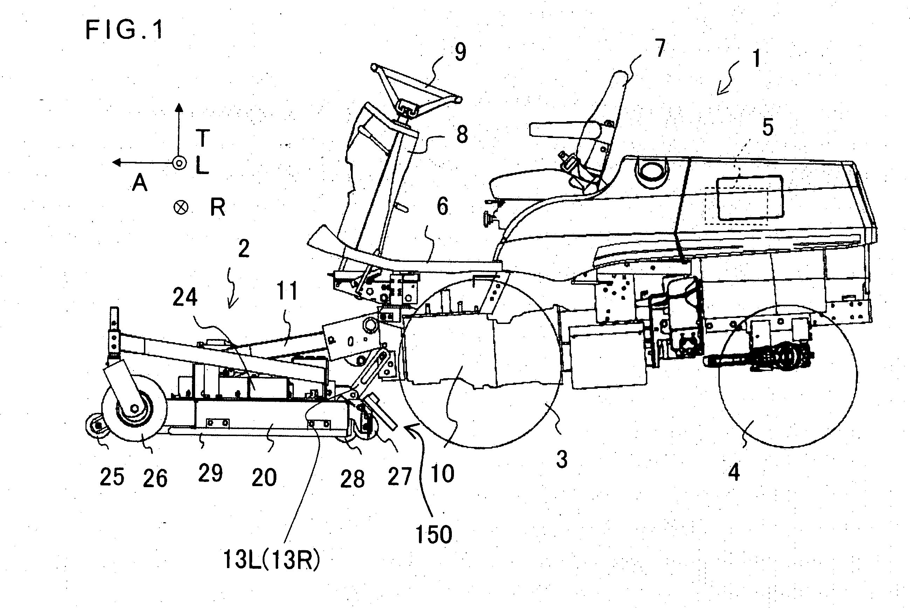

In this embodiment, a configuration and operation with respect to the riding-type mower according to the present Embodiment 1 will be described with reference to FIGS. 1 to 10.

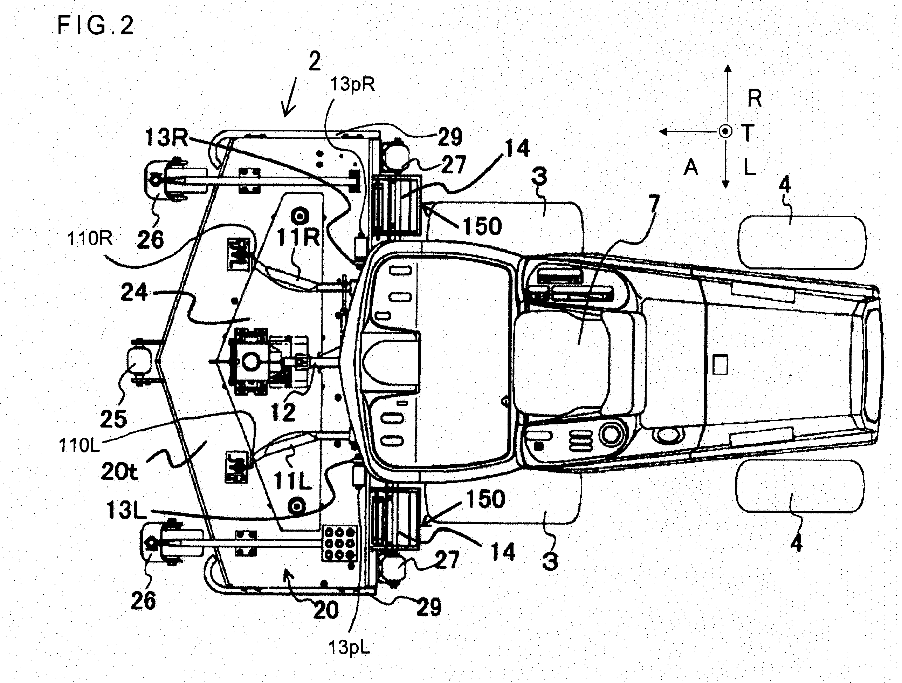

FIG. 1 is a left side view of a riding-type mower according to Embodiment 1 of the present invention. FIG. 2 is a plan view of the riding-type mower according to Embodiment 1 of the present invention.

By the way, in this specification and drawings, the front direction corresponds to the direction of movement of the riding-type mower when the grass or lawn is mowed (see the arrow A), the left direction corresponds to the direction of the driver's left hand when the driver rides on the riding-type mower and faces toward the direction of the movement of the riding-type mower (see the arrow L), and the right direction corresponds to the direction of the driver's right hand when the driver rides on the riding-type mower and faces toward the direction of the movement of the riding-type mower (see the arrow R). Further, the upward direction is denoted with an arrow T.

As shown in FIGS. 1 and 2, the riding-type mower of the present Embodiment 1 is provided with a vehicle body 1 on which an operator rides and a rear discharge type mower unit 2 which is connected to the front side of the vehicle body 1 via lift arms 11 L and 11 R of a pair of left and right link mechanisms. The vehicle body 1 has a pair of left and right front wheels 3 and a pair of left and right rear wheels 4, and an engine 5 is disposed in a rear portion of the vehicle body 1. Further, a floor part 6 is disposed in a front portion of the vehicle body 1, and a driver's seat 7 is disposed above the floor part 6. A steering post 8 is disposed in front of the driver's seat 7, and steering wheel 9 is disposed on the upper portion of the steering post 8.

A transmission case 10 is disposed under the driver's seat 7. Driving force transmitted from the engine 5 is transmitted to the mower unit 2 via a rotary shaft 12 which is connected to a driving force-takeoff shaft (not shown) of the transmission case 10.

This mower unit 2 is used for mowing a lawn or grass. When the lift arms 11 L and 11 R of the pair of left and right link mechanisms move in response to the extending and contracting operation of a lift cylinder (not shown), a lowered operation state and a raised non-operation state can be realized. As shown in FIG. 2, lift arms 11 L and 11 R of the link mechanism are turnably connected to a top plate 20t of the mower deck (a cutting blade housing) 20 via arm tip portions 110L and 110R respectively.

When the lift arms 11 L and 11 R of the pair of left and right link mechanisms are lowered, a pair of left and right contact gauge wheels 26 contacts with the ground, and then it becomes possible to carry out the operation for mowing a lawn or grass. In this case, a rear portion of the mower deck 20 is connected with a front lower portion of the vehicle body 1 by a pair of left and right rear links 13L and 13R to regulate up-and-down motion of the rear portion of the mower deck 20.

On the other hand, when the connections established by the pair of left and right rear links 13L and 13R are released and then the lift arms 11L and 11R of the pair of left and right link mechanisms are raised, the mower deck 20 is in the state of a standing-up posture, in which the inside of the mower deck 20 faces toward the forward direction of the vehicle body 1, and as a result, it becomes possible to carry out clean, check or the like of the inside of the mower deck 20 of the mower unit 2. This will be described later in detail.

When the vehicle body 1 is propelled with the mower unit 2 being in the lowered operation state, the mower unit 2 performs the operation for mowing a lawn or grass by the three rotatable cutting blades 21, 22 and 23 which are accommodated in the mower deck 20. Then the cut grass is discharged from a cut grass discharge opening 14 which is disposed throughout the entire lateral width of the rear end portion of the mower deck 20 to the rearward of the mower deck 20.

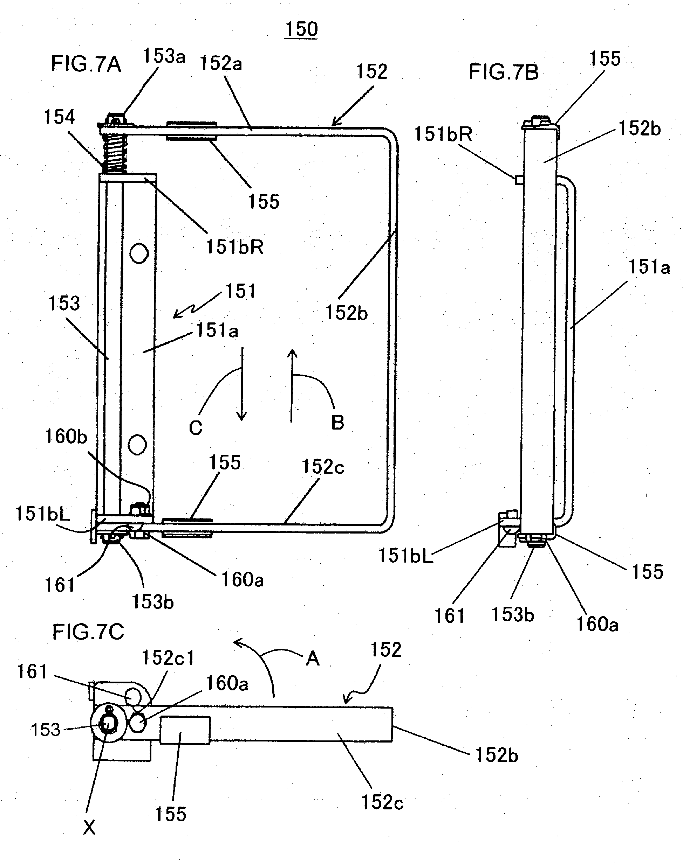

The lateral width of the mower unit 2 is wider than the lateral width of the vehicle body 1. As shown in FIG. 2, a guard member 150 is turnably disposed on the left and right end sides of the cut grass discharge opening 14. That is, in each region of the cut grass discharge opening 14, the guard member 150 exists outside the vehicle body 1 in order to prevent the foot of the person from getting into the cut grass discharge opening 14. The guard member 150 will be further described later (see FIGS. 7 to 9).

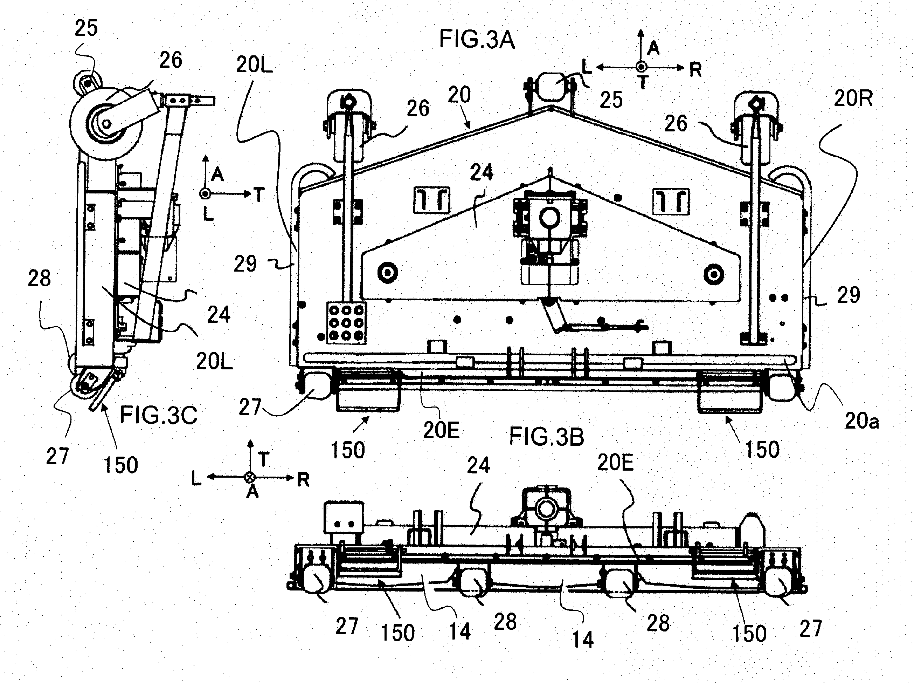

Hereinafter, mainly referring to FIGS. 3 to 6, the mower unit 2 in accordance with the present embodiment is described.

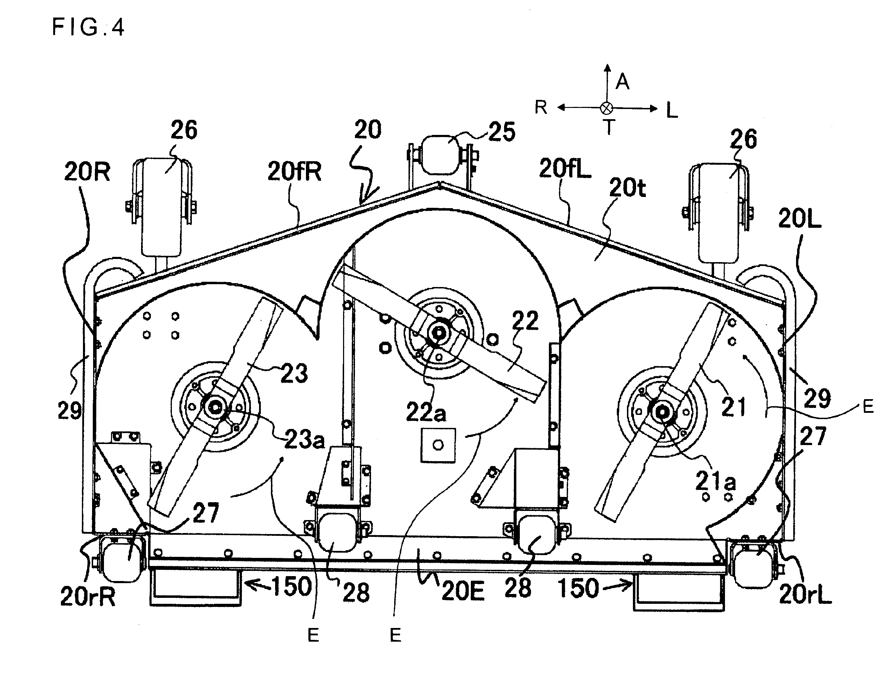

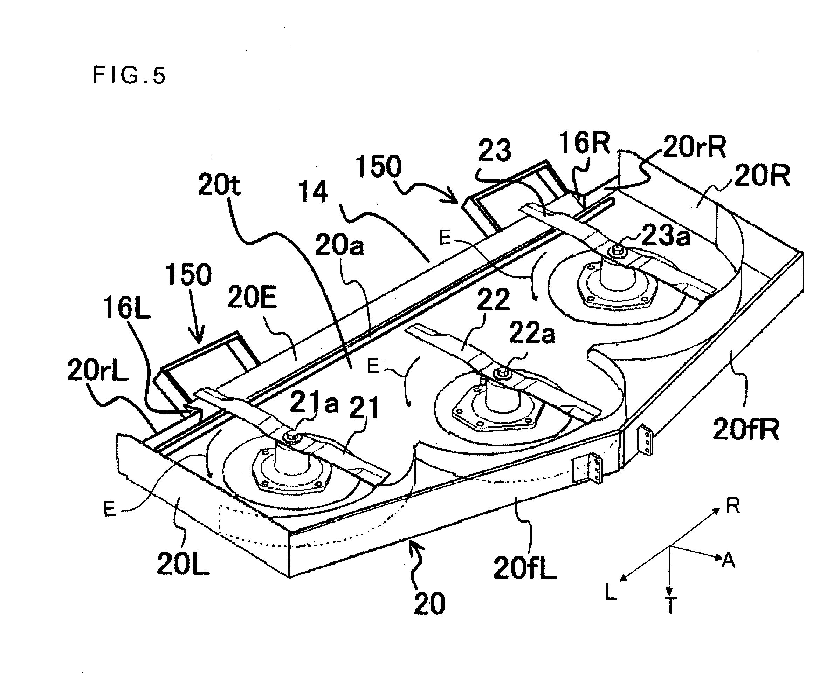

FIG. 3A is a plan view of a mower unit 2 according to the present Embodiment 1, FIG. 3B is a rear side view of the mower unit 2 according to the present Embodiment 1, and FIG. 3C is a left side view of the mower unit 2 according to the present Embodiment 1. FIG. 4 is a bottom view of the mower unit 2 according to the present Embodiment 1. FIG. 5 is a schematic perspective view viewed from the bottom side of the mower deck 20 according to the present Embodiment 1, and the illustrations of configurations other than the main parts (for example, front guide, rotatable cutting blades, guard members, and the like) are omitted.

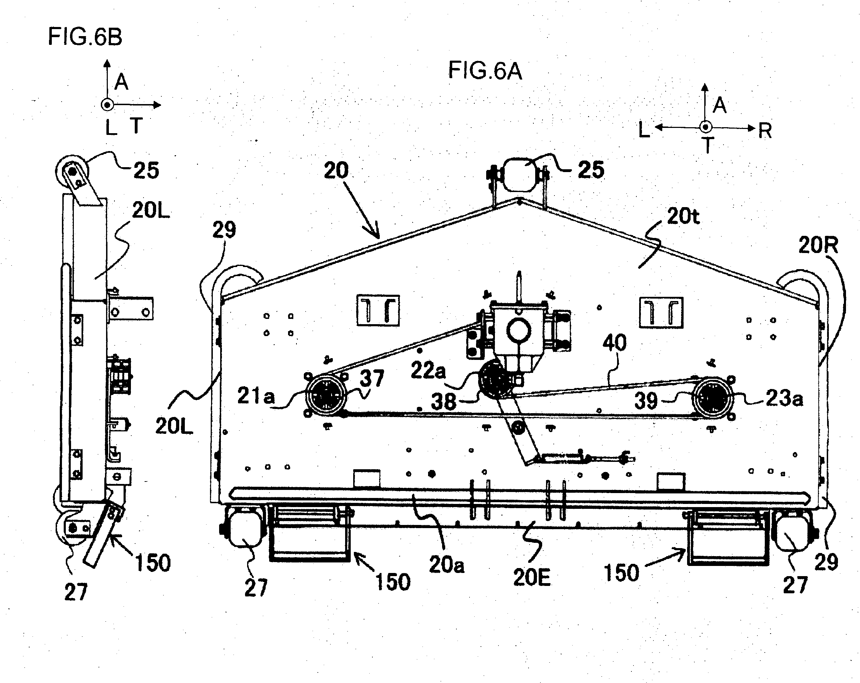

As shown in FIGS. 4 and 5, the mower unit 2 is provided with a first rotatable cutting blade 21, a second rotatable cutting blade 22 and a third rotatable cutting blade 23, and the mower deck 20 which accommodates these rotatable cutting blades 21, 22, and 23. Further, the mower unit 2 is provided with a transmission belt 40 (see FIG. 6), which is provided in an upper portion of the mower deck 2 and transmits driving force from the rotary shaft 12 to the three rotating blades, and a belt cover 24 which covers the transmission belt 40. As shown in FIGS. 4 and 5, the first rotatable cutting blade 21, the second rotatable cutting blade 22 and the third rotatable cutting blade 23 are rotated about a first rotatable shaft 21 a, a second rotatable shaft 22a, and a third rotatable shaft 23a in the same rotational direction (see arrow E direction), respectively.

As shown in FIGS. 3 and 4, a front center roller 25 is provided at the front side center portion of the mower deck 20, and a pair of left and right contact gauge wheels 26 and 26 is provided on the left and right sides of the front side of the mower deck 20. Further, a pair of left and right rollers 27 and 27 is provided at the left and right corners on the rear side of the mower deck 20, a pair of left and right inside rollers 28 and 28 is provided between these two rollers 27 and 27.

Protectors 29 and 29 which protect the mower deck 20 are provided at side walls 20L and 20R which are disposed on the left and right sides of the mower deck 20 respectively (see FIGS. 3 and 4).

A pair of left and right side walls 20fL and 20fR which are disposed on the front side of the mower deck 20, and the above mentioned side walls 20L and 20R are formed by utilizing the plate portion which is bent from the top plate 20t of the mower deck 20.

FIG. 6A is a plan view which shows a state where a belt cover 24 is removed from the mower unit 2 according to the present embodiment. FIG. 6B is a left side view of FIG. 6A. As shown in FIGS. 6A and 6B, the first rotatable shaft 21 a, the second rotatable shaft 22a, and the third rotatable shaft 23a are provided with a first pulley 37, a second pulley 38, and a third pulley 39, respectively. The transmission belt 40 is laid along the first pulley 37, the second pulley 38, and the third pulley 39 in order to transmit the driving force from the rotary shaft 12 to the three rotatable cutting blades 21, 22 and 23.

According to the above described configuration, when the driving force from the engine 5 is transmitted to the transmission belt 40 through the rotary shaft 12, the three rotatable cutting blades 21, 22 and 23 are rotated in the E direction respectively, and the mowing of a lawn or grass is performed by these rotatable cutting blades 21, 22 and 23. The mowing height of the mower unit 2 is set by adjusting the height of the pair of left and right contact gauge wheels 26 and 26.

Hereinafter, mainly referring to FIGS. 7 to 9, the guard member 150 which is disposed in the mower unit 2 in accordance with the present embodiment is described.

FIG. 7A is a plan view of a guard member 150 of the mower unit 2 according to the present Embodiment 1, and a fixing plate 151 for fixing the guard member 150 to a cut grass guide member 20E which is disposed in the rear portion of the mower deck 20. FIG. 7B is a front view of the guard member 150 of the mower unit 2 according to the present Embodiment 1, and the fixing plate 151. FIG. 7C is a left side view of the guard member 150 of the mower unit 2 according to the present Embodiment 1, and the fixing plate 151.

The cut grass guide member 20E will be further described later

As shown in FIG. 7A, 7B, and 7C, the guard member 150 is constructed as a practically rectangular frame body which has a spatial region inside, and is provided with a guard body 152, a turnable shaft 153 which turnably supports the guard body 152 on the fixing plate 151, a compression spring member 154, which is disposed on one side of the turnable shaft 153 and regulates the movement of the guard body 152 in the axis direction of the turnable shaft 153 (see reference sign X of FIG. **7C**), and the like.

The guard member 152 is a board member which is bent practically in the shape of the character "U" in plan view. A tip portion of one side part 152a (which can be referred to as "second side part") of the both side parts is connected to a one end part 153a of the turnable shaft 153 in a right angle, and a tip portion of the other side part 152c (which can be referred to as "third side part") of the both side parts is connected to the other side part 153b of the turnable shaft 153 in a right angle. A center side part 152b (which can be referred to as "fourth side part") which exists between the one side part 152a and the other side part 152c is provided for preventing the foot of a person from getting into the cut grass discharge opening 14.

A sheet-like protection member 155 which is made from rubber or the like is fixed at each of the lower end portions of the one side part 152a and the other side part 152c of the guard body 152 to prevent the occurrence of damage due to the direct contact of the cut grass guide member 20E with the guard body 152. A tip side of the other side part 152c of the guard body 152 is provided with a fixing hole (not shown) which is used for fixing the guard body 152 to the fixing plate 151 with the bolt 160a and nut 160b.

The fixing plate 151 is provided with a bottom plate 151a which is fixed to the upper surface of the cut grass guide member 20E with screws, and a pair of left and right turnable shaft holders 151bL and 151 bR which hold the turnable shaft 153 turnably and rise perpendicularly from both end portions of the bottom plate 151a. As shown in FIGS. 7A, 7B and 7C, a stopper pin 161 with a hemisphere shaped end portion is inserted in and fixed to the left side turnable shaft holder 151bL. The left side turnable shaft holder 151bL is provided with a fixing hole (not shown) which is used for fixing the guard body 152 to the fixing plate 151 with the bolt 160a and nut 160b.

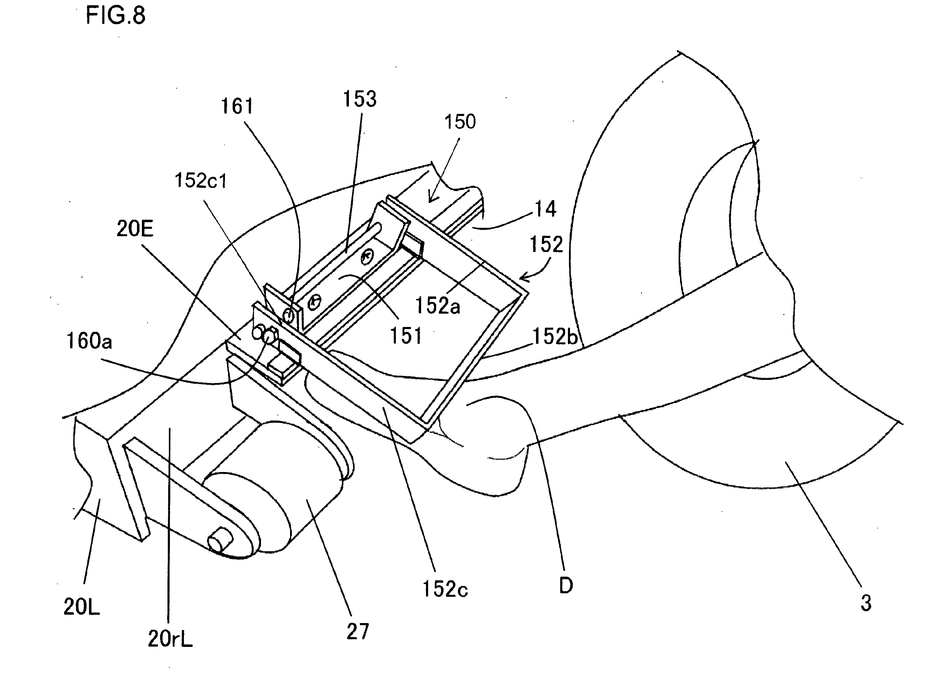

As is apparent from the above description, when the bolt 160a and nut 160b fixing the guard body 152 to the fixing plate 151 are removed using a tool (not shown), the guard body 152 becomes able to be rotated about the axis X of the turnable shaft 153 (see FIG. 7C). In this case, the guard body 152 is always pressed against the fixing plate 151 in the direction B (see FIG. 7A) due to the force in the extension direction of the compression spring member 154. Therefore, when external force which rotates the guard body 152 in the direction A (see FIG. 7C) acts to the guard body 152, an upper end portion 152c1 (see FIGS. 7C and 8) of the other side part 152c of the guard body 152 contacts to the lower side of the hemisphere shaped end portion of the stopper pin 161. However, since the end portion of the stopper pin 161 is hemisphere-shaped, the guard body 152 can move slightly in the direction C (see FIG. 7A) with respect to the fixing plate 151, and as a result, the other side part 152c of the guard body 152 can get over the end portion of the stopper pin 161 easily.

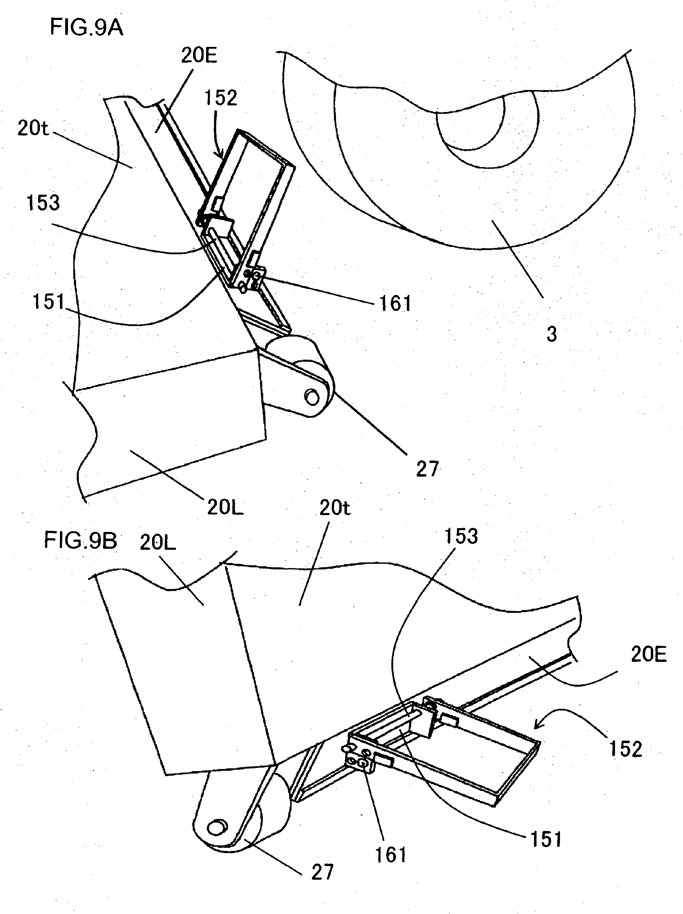

Next, the function and effect of the guard member 150 will be described with reference to FIGS. 8, 9A and 9B.

FIG. 8 is a perspective view of the guard member 150 mounted on the mower unit 2 according to the present Embodiment 1. FIG. 9A is a perspective view which shows a state where the guard body 152 of the guard member 150 according to the present Embodiment 1 is allowed to be rotated upward by the operator before the mower unit 2 stands on the ground. FIG. 9B is a perspective view which shows a state where the mower unit 2 according to the present Embodiment 1 stands on the ground with the guard body 152 being allowed to be rotated upward. In this case, the pair of left and right rollers 27 and 27 touches the ground, however, the guard body 152 does not touch the ground.

In case of the usual mowing operation, as shown in FIG. 8, the guard body 152 is fixed to the fixing plate 151 with the bolt 160a and nut 160b. Therefore, the pair of left and right side parts 152a and 152c is disposed in such a manner that they incline along the cut grass guide member 20E and extend backward, and the center side part 152b is at the position with a predetermined distance from the cut grass discharge opening 14 and is located near the ground.

Therefore, even if the tip of a foot of the operator approaches the cut grass discharge opening 14 due to the operator's slipping, as shown in FIG. 8, the operator's instep (see reference sign D in FIG. 8) comes in contact with the center side part 152b of the guard body 152, and as a result, the tip of the foot is prevented from approaching the cut grass discharge opening 14 further.

By means of this, the foot of the operator can be prevented from getting into the cut grass discharge opening 14, and as a result, the foot can be prevented from contacting the turning left side and right side rotatable cutting blades 21 and 23. Further, since the guard member 150 is constructed as a practically rectangular frame body which has a spatial region inside, the cut grass is not prevented from being discharged from the cut grass discharge opening 14.

Incidentally, the frame body of the guard member 150 can have any configuration as long as the frame body is constructed as a frame body which has a spatial region inside so that the cut grass can be discharged smoothly from the cut grass discharge opening 14. That is, instead of the above described practically rectangular frame body, for instance, a trapezoid-shaped frame body, a parallelogram-shaped frame body, and another polygon-shaped frame body can also be used.

On the other hand, when the operator cleans or checks the inside of the mower deck 20 of the mower unit 2, the connections established by the pair of left and right rear links 13L and 13R are released and then the lift arms 11L and 11 R of the pair of left and right link mechanisms are raised to make the posture of the mower unit 2 be in the state of a standing-up posture, as described above. In this case, as shown in FIG. 9A, before the mower unit 2 is allowed to be in the state of a standing-up posture, when the operator removes the bolt 160a and nut 160b fixing the guard body 152 to the fixing plate 151 using a tool (not shown), the guard body 152 becomes able to be rotated about the axis X of the turnable shaft 153 approximately by 90 degrees (see arrow A in FIG. 7C).

By means of this, as shown in FIG. 9B, even when the mower unit 2 becomes in the state of a standing-up posture, the guard body 152 does not touch the ground, and then the guard body 152 does not become obstructive. Further, after the operator removes the bolt 160a and nut 160b fixing the guard body 152 to the fixing plate 151 using a tool (not shown), even if the operator forgets to rotate the guard body 152, the guard member 150 is not damaged. It is because the guard body 152 can get over the hemisphere-shaped end portion of the stopper pin 161 easily when the mower unit 2 starts standing up.

Next, the configuration for reinforcing the mower deck 20 will be described.

As shown in FIGS. 5 and 8, the cut grass guide member 20E is formed so as to incline in a lower direction by utilizing the plate portion which is bent from the rear end portion of the mower deck 20 on the upper side of the cut grass discharge opening 14. By means of this, the strength reduction, which arises due to opening of the rear part of the mower deck 20 in the right-and-left width direction, can be eased.

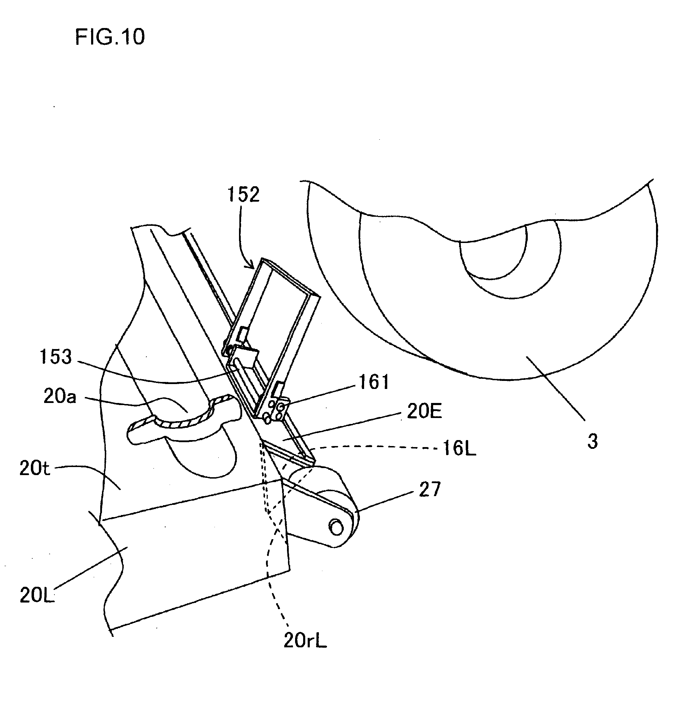

Further, as shown in FIG. 5, a reinforcing rib 20a is formed in the neighborhood of the cut grass guide member 20E and in the right-and-left width direction of the mower deck 20. The reinforcing rib 20a protrudes to the inside of the mower deck 20 (see FIG. 10).

Furthermore, both end parts of the cut grass guide member 20E are welded, using a pair of left and right rear side walls 20rL and 20rR, which are formed by utilizing the plate parts which are bent in a right angle from the right-and-left end portions of the rear end of the mower deck 20, and a pair of left and right triangle-shaped reinforcing plates 16L and 16R.

By means of this, as shown in FIG. 5, in the case of the mower deck 20 of the present embodiment, a pair of left and right front side walls 20fL and 20fR, a pair of left and right side walls 20L and 20R, and the pair of left and right side rear side walls 20rL and 20rR are firmly connected by welding via the pair of left and right triangle-shaped reinforcing plates 16L and 16R and the cut grass guide member 20E to realize strength up. The generation of distortion, transformation, crack, and the like in the rear part of the mower deck 20, on which weight of a pair of left and right rear part links 13L and 13R (see FIGS. 1 and 2) and the like is loaded, can be prevented.

Incidentally, the lower surface of the cut grass guide member 20E may be provided with a guide plate made of rubber for guiding cut grass still more smoothly.

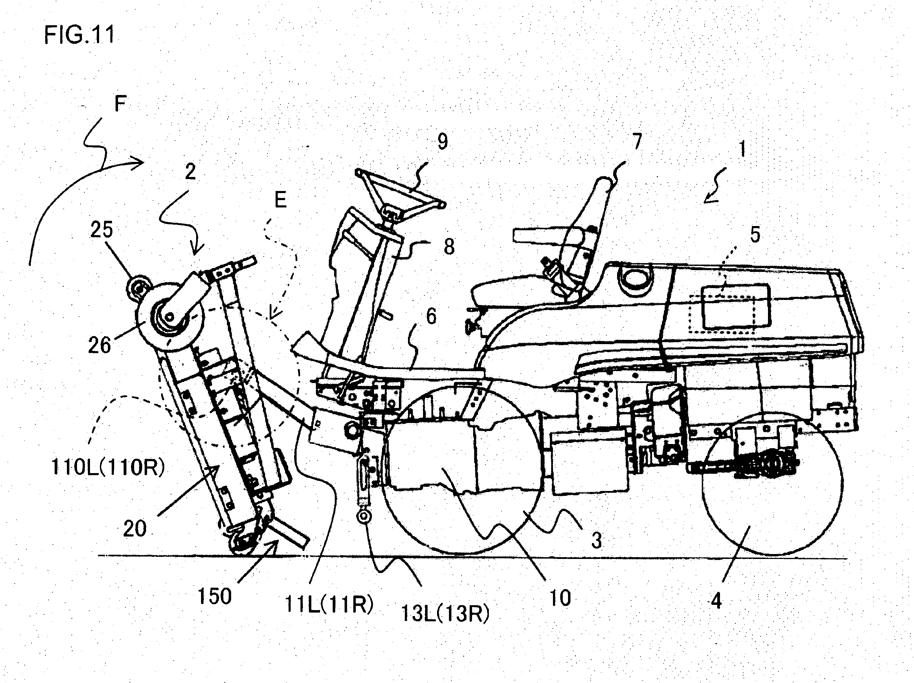

Hereinafter, referring to FIGS. 11, 12 and 13, the configuration, in which the mower unit 2 can be maintained in the standing-up state and the operator can work safely, is described.

First, for convenience, using FIG. 11, problems are described that may occur when the conventional mower unit is made to be in the standing-up posture. FIG. 11 is a left side view which shows a state where the mower unit according to the present Embodiment 1 is in the standing-up posture.

When the operator makes the conventional mower unit be in the state of a standing-up posture, the operator removes a pair of left and right connecting pins (see reference signs 13pL and 13pR in FIG. 2), which connect the pair of left and right rear links (see reference signs 13L and 13R in FIG. 11) and mower deck (see reference sign 20), to release the connection, and raises a pair of left and right lift arms of a link mechanism (see reference signs 11 L and 11 R). By means of this, the conventional mower unit turns about tip portions (see reference signs 110L and 110R in FIG. 11) of the lift arms (see reference signs 11L and 11R in FIG. 11) in the arrow F direction due to the weight of the conventional mower unit, while rising, and then the conventional mower unit stops the turn in a balanced state, and as a result, the conventional mower unit becomes in a standing-up posture (see FIG. 11).

Then, the operator cleans or checks the inside of the conventional mower deck (see reference sign 20 in FIG. 11) or exchanges the rotatable cutting blade of the mower unit. However, since the conventional mower unit becomes in a standing-up posture when it stops the turn in the balanced state due to the weight of itself, the standing-up posture can not be maintained stably, and as a result, the conventional mower unit may fall down during the operator's work, because there is no mechanism in which turn of the mower unit is stopped in case the balance collapses.

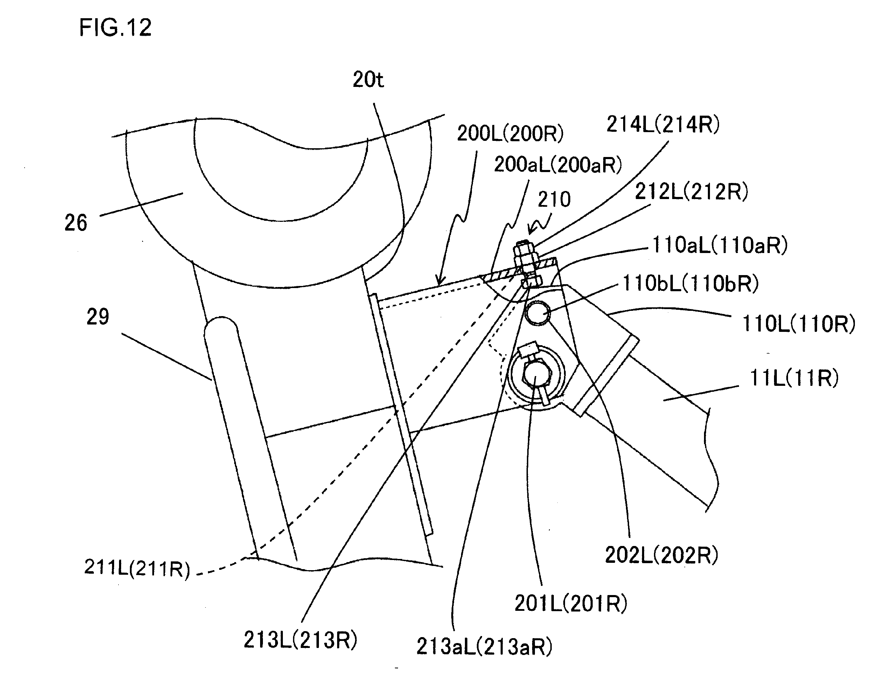

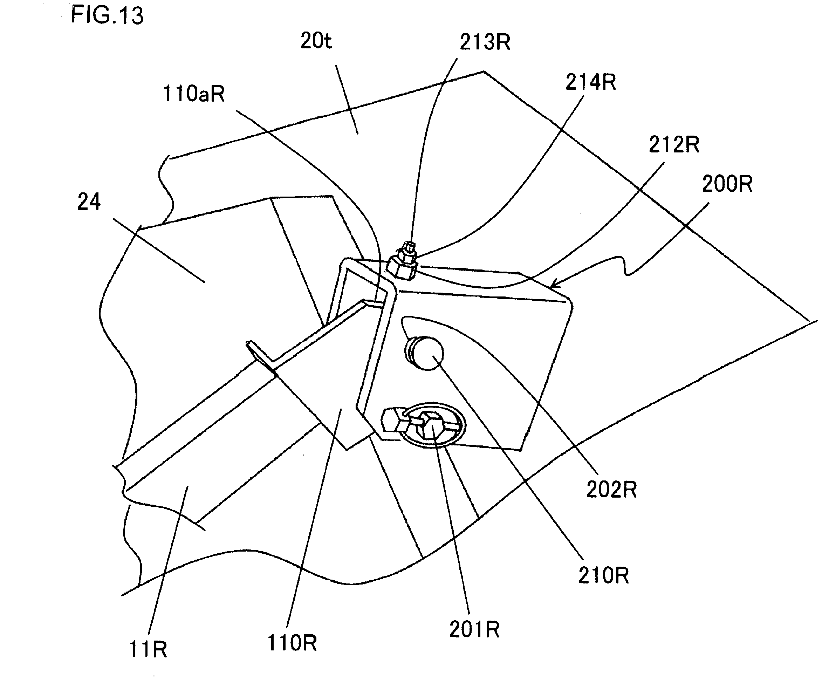

Therefore, in order to solve such problems of the conventional mower unit, the configuration shown in FIGS. 12 and 13 is adopted. Hereinafter, the configuration will be described.

FIG. 12 is a partial enlarged view of region E of FIG. 11, and for convenience, in FIG. 12, a part of a connecting bracket is removed to show the inside of the connecting bracket. FIG. 13 is a partial enlarged perspective view of the right side portion of the region E of FIG. 11.

As shown in FIG. 12, the tip portions 110L and 110R of the lift arms 11 Land 11R of the pair of left and right link mechanisms are turnably supported by turnable supporting pins 201 L and 201 R with respect to a pair of left and right connecting brackets 200L and 200R which are disposed on the top plate 20t of the mower deck 20.

Front corner parts 110aL and 110aR of the tip portions 110L and 110R are cut at 45 degrees (C chamfer plane), and first through-holes 110bL and 110bR (see FIG. 12) for inserting a pair of left and right fixing pins 210L and 210R (see FIG. 13) which are used for holding the standing-up posture of the mower unit 2 are disposed on the tip portions 110L and 110R in the neighborhood of the front corner parts 110aL and 110aR. Further, the connecting brackets 200L and 200R are also provided with second through-holes 202L and 202R (see FIG. 13) for inserting the pair of left and right fixing pins 210L and 210R.

In the present Embodiment 1, a pair of left and right connecting pins 13pL and 13pR (see FIG. 2) which connect the mower deck 20 and the rear links 13L and 13R is used as the pair of left and right fixing pins 210L and 210R (see FIG. 13) which are used for holding the standing-up posture of the mower unit 2. That is, as described above, when the operator makes the mower unit 2 be in the state of a standing-up posture, the pair of left and right connecting pins 13pL and 13pR which connect the mower deck 20 and the rear links 13L and 13R is removed to release the connection, and a pair of left and right lift arms 11 L and 11 R of a link mechanism is raised. Therefore, it is possible to use the removed connecting pins 13pL and 13pR.

A stopper mechanism 210, which regulates the turning angle in the standing-up posture of the mower unit 2, is disposed in the upper portions of the front sides 200aL and 200aR of the connecting brackets 200L and 200R.

The stopper mechanism 210 has a configuration in which fixing nuts 212L and 212R are fixed at the positions of the through-holes 211 L and 211 R which are formed on the upper portions of the front sides 200aL and 200aR of the connecting brackets 200L and 200R, stopper bolts 213L and 213R are screwed with the fixing nuts 212L and 212R, and each height of the stopper bolts 213L and 213R can be adjusted by turning each one of the stopper bolts 213L and 213R. Then, the stopper bolts 213L and 213R can be locked by lock nuts 214L and 214R.

According to the above described configuration, when the operator makes the mower unit 2 be in the state of a standing-up posture, the operator removes the pair of left and right connecting pins 13pL and 13pR, which connect the mower deck 20 and the pair of left and right rear links 13L and 13R, to release the connection, and raises a pair of left and right lift arms of a link mechanism (see reference signs 11 L and 11 R). By means of this, as shown in FIGS. 11 and 12, the mower unit 2 turns about the turnable supporting pins 201 L and 201 R (see FIG. 12) of the tip portions 110L and 110R of the lift arms 11 L and 11 R in the arrow F direction due to the weight of the mower unit 2, while rising, and then the mower unit 2 stops the turn in a balanced state, and as a result, the mower unit 2 becomes in a standing-up posture.

When the mower unit 2 becomes in a standing-up posture, the operator turns the pair of left and right stopper bolts 213L and 213R and adjusts the height thereof so that head parts 213aL and 213aR of these stopper bolts 213L and 213R touch the front corner parts 110aL and 110aR of the tip portions 110L and 110R of the lift arms 11L and 11 R, and thereafter, the operator locks the stopper bolts 213L and 213R by fastening the lock nuts 214L and 214R.

By means of this, since the standing-up posture of the mower unit 2 can be maintained, the operator can do the operation more safely.

Further, when the state in which the standing-up posture of the mower unit 2 is maintained, the pair of left and right connecting pins 13pL and 13pR, which have been removed from the rear links 13L and 13R when the operator has made the mower unit 2 be in the state of standing-up posture, is used as the pair of left and right fixing pins 210L and 210R (see FIG. 13) which hold the standing-up posture of the mower unit 2. That is, the operator inserts these connecting pins 13pL and 13pR, as the pair of left and right fixing pins 210L and 210R, into the second through-holes 202L and 202R, which are formed on the connecting brackets 200L and 200R, and into the first through-holes 110bL and 110bR, which are formed on the tip portions 110L and 110R, respectively, and as a result, the mower unit 2 is certainly fixed so as not to be turned.

By means of this, since the standing-up posture of the mower unit 2 can be certainly held, the operator can do the operation still more safely. Further, since the pair of left and right connecting pins 13pL and 13pR, which have been removed from the rear links 13L and 13R, is used as the pair of left and right fixing pins 210L and 210R, new additional parts are not required.

Next, the configuration, in which the pair of left and right lift arms 11 L and 11 R of the link mechanism does not touch the upper surface of the belt cover 24 in the state where the mower unit 2 is released from the vehicle body 1, is described.

When the mower unit 2 is released from the vehicle body 1, it is required that the rear links 13L and 13R are released from the mower unit 2 and the lift arms 11 L and 11 R are released from the vehicle body 1 (see FIG. 1).

When the lift arms 11 L and 11 R are released from the vehicle body 1, the lift arms 11 L and 11 R are rotated due to the weight of the lift arms 11 L and 11 R about the turnable supporting pins 201 L and 201 R disposed on the tip portions 110L and 110R of the lift arms 11 Land 11 R, and then are moved toward the upper surface of the belt cover 24 (see FIGS. 1, 11 and 12). However, when the lift arms 11 L and 11 R have been moved to the horizontal position, the tip portions 110L and 110R touch a turning stopper (not shown), which is disposed on an inner wall on the front side of the connecting brackets 200L and 200R, and then the turn of the lift arms 11 Land 11 R is stopped, and as a result, the lift arms 11 L and 11 R are kept in the horizontal state.

By means of this, when the mower unit 2 is released from the vehicle body 1 and is put on a truck to be moved or is kept in a warehouse, the upper surface of the belt cover 24 is not damaged. Therefore, it is not required that the operator covers, with a sheet and the like for preventing the generation of the damage, the upper surface of the belt cover 24.

In the above described embodiment, a case is described where the guard member 150, which is provided with the compression spring member 154, and the fixing plate 151, which is provided with the stopper pin 161 having the hemisphere shaped end portion, are combined. However, the present invention is not limited to such a case. For instance, another case can be considered where the guard member, which is not provided with the compression spring member, and the fixing plate, which is not provided with the stopper pin having the hemisphere shaped end portion, are combined. That is, in this case, the mower unit 2 is not prevented from becoming in the state of a standing-up posture and also the guard member is not damaged nor transformed because the guard member is turnable as long as the bolt 160a and nut 160b for fixing the guard body 152 to a left-side turnable shaft holder 151bL are removed.

In the above described embodiment, a case is described where the cut grass guide member 20E which inclines in the lower direction is disposed on the upper end side of the cut grass discharge opening 14. However, the present invention is not limited to such a case. For instance, the cut grass guide member 20E may not be disposed. In this case, the fixing plate 151 for fixing the guard member 150 is allowed to be fixed to the upper end portion of the cut grass discharge opening 14 of the mower deck 20.

A riding-type mower according to the present invention is capable of providing a riding-type mower with safety improved, and is useful for a riding-type mower in which the rear discharge type mower unit is disposed, for example.

## Claims

1. A riding-type mower comprising:
a vehicle body (1); and
a mower unit (2) which is connected to a front side of the vehicle body (1), wherein the mower unit (2) has a rotatable cutting blade (21, 22, 23) which cuts grass or lawn while rotating, and a mower deck (20) which accommodates the rotatable cutting blade (21, 22, 23) and is provided with a cut grass discharge opening (14) in a rear portion of the mower deck;
the mower deck (20) is provided with a cut grass guide member (20E) which inclines downward and to a rear side of the cut grass discharge opening (14); and
each of a width of the mower deck (20) and a width of the cut grass guide member (20E) is wider than a width of the vehicle body (1) with respect to a right-left direction of the vehicle body (1), **characterized in that**
the mower deck (20) is constructed so that posture of the mower deck (20) can be changed into any one of a first posture, in which it is possible to cut the grass or lawn, and a second posture in which an inside of the mower deck (20) faces toward a forward direction of the vehicle body (1),
a guard member (150) is disposed on an upper surface of the cut grass guide member (20E) behind each part of the discharge opening (14) being outside of the vehicle body (1) with respect to the right-left direction of the vehicle body (1),
the guard member (150) is constructed in such a manner that the guard member (150) can be turned about an axis (X),
the guard member (150) has a rear part (152b) which is disposed in a predetermined distance from the cut grass discharge opening (14) and located near the ground, and side parts (152a, 152c) disposed so as to incline along the cut grass guide member (20E) and extend backward at the time when the mower deck (20) is allowed to be in the first posture, and
the guard member (150) is rotatable about the axis (X) in order to be disposed at a position where the guard member (150) does not touch the ground at the time when the mower deck (20) is allowed to be in the second posture.

2. The riding-type mower according to claim 1, **characterized in that** the guard member (150) is constructed as a frame body.

## Patentansprüche

1. Ein Aufsitz-Mäher, der umfasst:
einen Fahrzeug-Körper (1); und
eine Mäher-Einheit (2), die an einer Vorder-Seite des Fahrzeug-Körpers (1) verbunden ist, wobei die Mäher-Einheit (2) ein rotierbares Schneid-Messer (21, 22, 23) hat, welches Gras oder Rasen schneidet, während es rotiert, und ein Mäher-Deck (20), welches das drehbare Schneid-Messer (21, 22, 23) aufnimmt und mit einer Gras-Schnitt-Abgabeöffnung (14) in einem hinteren Abschnitt des Mäher-Decks vorgesehen ist;
das Mäher-Deck (20) ist mit einem Gras-Schnitt-Führungselement (20e) vorgesehen, welches sich nach unten und zu einer Rück-Seite der Gras-Schnitt-Abgabeöffnung (14) neigt; und
jede von einer Breite des Mäher-Decks (20) und einer Breite des Gras-Schnitt-Führungselements (20e) ist breiter als eine Breite des Fahrzeug-Körpers (1) mit Bezug auf eine Rechts-Links-Richtung des Fahrzeug-Körpers (1), **dadurch gekennzeichnet, dass**
das Mäher-Deck (20) konstruiert, so dass die Position des Mäher-Decks (20) in irgendeine von einer ersten Position in welcher es möglich ist, das Gras oder den Rasen zu schneiden, und einer zweiten Position, in welcher ein Innenbereich des Mäher-Decks (20) zu einer Vorder-Richtung des Fahrzeug-Körpers 1 zeigt, geändert werden kann,
ein Schutz-Element (150) an einer oberen Fläche des Gras-Schnitt-Führungselements (20e), hinter jedem Teil der Abgabeöffnung (14), der außerhalb des Fahrzeug-Körpers (1) mit Bezug auf die Rechts-Links-Richtung des Fahrzeug-Körpers (1) ist, positioniert ist,
das Schutz-Element (51) ist in so einer Weise konstruiert, dass das Schutz-Element (150) um eine Achse (X) gedreht werden kann,
das Schutz-Element (50) hat einen hinteren Teil (152b), der in einem vorgegebenen Abstand von der Gras-Schnitt-Abgabeöffnung (14) und näher zu dem Boden positioniert ist, und Seiten-Teile (152a, 152c) sind positioniert, so dass diese entlang des Gras-Schnitt-Führungselements (20e) geneigt sind und sich nach hinten erstrecken zu einem Zeitpunkt, wenn es dem Mäher-Deck (20) gestattet ist, in der ersten Stellung zu sein, und
das Schutz-Element (150) ist drehbar um die Achse (X), um in einer Position positioniert zu sein, in der das Schutz-Element (150) nicht den Boden berührt zu einem Zeitpunkt, wenn es dem Mäher-Deck (20) gestattet ist, in der zweiten Stellung zu sein.

2. Der Aufsitz-Mäher gemäß Anspruch 1, **dadurch gekennzeichnet, dass** das Schutz-Element (150) als Rahmen-Körper konstruiert ist.

## Revendications

1. Tondeuse du type à enfourcher comprenant :
une carrosserie de véhicule (1) ; et
une unité de tondeuse (2) qui est reliée au côté avant de la carrosserie de véhicule (1), dans laquelle l'unité de tondeuse (2) comporte une lame de coupe rotative (21, 22, 23) qui coupe l'herbe ou le gazon tout en tournant, et un plateau de coupe (20) qui reçoit la lame de coupe rotative (21, 22, 23) et est muni d'une ouverture d'évacuation d'herbe coupée (14) dans la partie arrière du plateau de coupe ;
le plateau de coupe (20) est muni d'un élément guide d'herbe de coupe (20E) qui s'incline vers le bas et vers le côté arrière de l'ouverture d'évacuation d'herbe de coupe (14) ; et
chaque largeur parmi la largeur du plateau de coupe (20) et la largeur de l'élément guide d'herbe de coupe (20E) est plus grande que la largeur de la carrosserie de véhicule (1) par rapport à la direction droite-gauche de la carrosserie de véhicule (1), **caractérisée en ce que**
le plateau de coupe (20) est construit de sorte que la posture du plateau de coupe (20) peut être modifiée dans l'une quelconque parmi une première posture dans laquelle il est possible de couper l'herbe ou le gazon, et une seconde posture dans laquelle l'intérieur du plateau de coupe (20) est tourné vers l'avant de la carrosserie de véhicule (1),
un élément de protection (150) est disposé sur la surface supérieure de l'élément guide d'herbe de coupe (20E) derrière chaque partie de l'ouverture d'évacuation (14) se trouvant en dehors de la carrosserie de véhicule (1) par rapport à la direction droite-gauche de la carrosserie de véhicule (1),
l'élément de protection (150) est construit de telle manière que l'on peut faire tourner l'élément de protection (150) autour d'un axe (X),
l'élément de protection (150) comporte une partie arrière (152b) qui est disposée à une distance prédéterminée de l'ouverture d'évacuation d'herbe de coupe (14) et située près du sol, et des parties latérales (152a, 152c) disposées de façon à être inclinées le long de l'élément guide d'herbe de coupe (20E) et à s'étendre vers l'arrière au moment où l'on autorise le plateau de coupe (20) à être dans la première posture, et
on peut faire tourner l'élément de protection (150) autour de l'axe (X) de façon à être disposé dans une position où l'élément de protection (150) ne touche pas le sol au moment où l'on autorise le plateau de coupe (20) à être dans la seconde posture.

2. Tondeuse du type à enfourcher selon la revendication 1, **caractérisée en ce que** l'élément de protection (150) est construit sous forme d'un corps de châssis.
